# EUROPEAN PATENT APPLICATION

(11) **EP 1 593 618 A1**
(43) Date of publication of application: **09.11.2005**
(21) Application number: 05103569.9
(22) Date of filing: 29.04.2005
(51) Int. Cl.: B65G 21/16

(54) **Chain conveyor guide**

(30) Priority: 30.04.2004 IT TO20040273
(71) Applicant: EWAB SRL, 10086 Rivarolo Canavese (IT)
(72) Inventor: SILLEN, Lennart, 10040, CASELETTE (IT)
(74) Representative: Jorio, Paolo

(57) **Abstract**

Conveyor (1) comprising a drive unit (5), a guidance assembly (3; 40) having a first guidance element (24) and a second guidance element (31; 43) having closed crossed section defined by a multiplicity of walls (23a, 25, 29; 25, 45, 46, 49), a first and a second inversion unit (16, 19) rigidly connected to the guidance assembly (3) and a closed chain (6) slidable on the guidance assembly (3) and co-operating with the first and the second inversion units (16, 19) defining a first branch (21) along which the chain (6) slides guided by the first guidance element (24) and a second branch (22) along which the chain (6) slides guided by the second guidance element (31; 43). In the conveyor (1) the chain (6) slides over at least one of the walls (29; 46) defining the second guidance element (31; 43).

## Description

The present invention relates to an enhanced guide of a chain conveyor.

Chain conveyors generally comprise a support guide defining a conveyance path, a closed chain slidably movable on the guide and having a planar conveyance face, and a motor for actuating the chain along said guide allowing the conveyance of products by means of the motion of the chain, for example the products can bear directly on the conveyance face of the chain.

Chain conveyors can constitute closed or open conveyance lines, according to utilisation requirements.

In the case of closed conveyance lines, for example looped, it is possible to use a single chain having the conveyance face always oriented upwards if the length of the line is small and a single motor can be used.

In the case of closed conveyance lines with large extension, it is preferable to connect in series multiple conveyors having an open conveyance path, for example rectilinear, each having its own motor. More in general, conveyors with open conveyance path can constitute open conveyance lines and comprise a guide having at its ends inversion assemblies with respective pulleys whereon the chain is wound defining respective working and return branches. In particular, along the working branch a link of the chain has the conveyance face oriented upwards and the products can be set down until the inversion assembly is reached. Subsequently, the link is upset passing in the inversion assembly and along the return branch, the conveyance face is oriented downwards.

Known chain conveyors comprise a rectilinear beam guide integrally having a horizontal load bearing structure with rectangular cross section and two pairs of respectively upper and lower guidance walls, to guide the chain laterally respectively along the work branch and the return branch and positioned symmetrically at opposite lateral ends of the load-bearing structure.

The chain of known conveyors comprises a multiplicity of links, each of which has a bearing plate having the conveyance face and two hook-shaped projections extending at the opposite part of the conveyance face relative to the bearing plate and defining with the bearing plate itself respective C shaped cavities, each having an opening oriented towards the respective upper guidance walls.

Moreover, each guidance wall longitudinally has an overhanging edge oriented inwards towards a vertical plane of symmetry of the rectilinear guide and coupling with the C shaped cavity.

In this way, along the work branch, the support plates slide on the upper overhang edges, whilst along the return branch the shaped projections slide on the lower overhanging edges.

However, known chain conveyors have a relative complex cross section of the rectilinear guide, having large transverse size and high production costs.

The object of the present invention is to provide a guide of a chain conveyor that is free from the drawbacks described above.

According to the present invention, a guide for chain conveyors is provided as defined in claim 1.

For a better understanding of the present invention, a preferred embodiment shall now be described, purely by way of non limiting example and with reference to the accompanying drawings, in which:
- Figure 1 is a partially sectioned lateral view of a chain conveyor comprising a guide according to the present invention;
- Figure 2 is a plan view of a chain of the conveyor of Figure 1;
- Figure 3 is a cross section according to the line III-III of Figure 1;
- Figure 4 is a view of a curve of the conveyor of Figure 1; and
- Figure 5 is a section according to the line V-V of Figure 4.

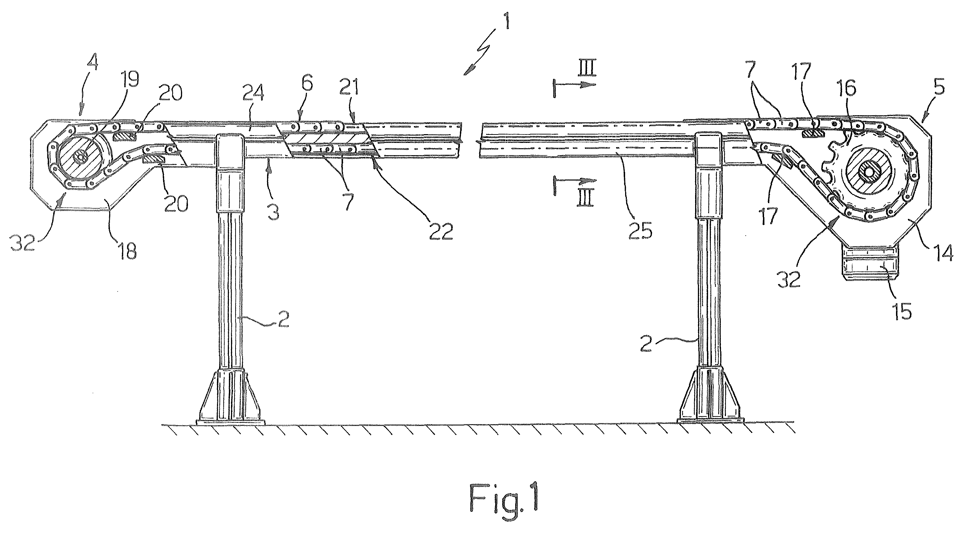

In Figure 1, the reference number 1 globally designates a chain conveyor comprising a pair of vertical supports 2 bearing on a tread plane, a rectilinear beam guide 3 fastened horizontally on the vertical supports 2 and an inversion assembly 4 and a drive unit 5 connected to respective opposite ends of the beam guide 3. The conveyor 1 further comprises a chain 6 with rectangular section actuated by the drive unit 5 and having a multiplicity of links 7 made of plastic material, slidable along the beam guide 3 to convey a multiplicity of products.

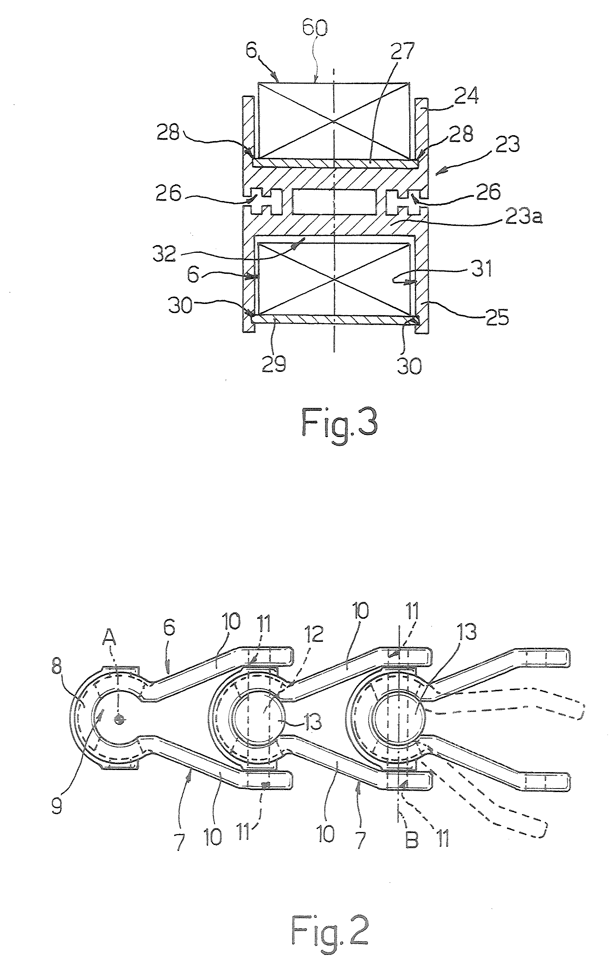

The links 7 (Figure 2) of the chain 6 are substantially C shaped and comprise a curved end portion 8 defining a circular cavity 9 having a vertical axis A and a pair of arms 10, symmetrical with respect to a plane passing through the axis A.

The arms 10 have respective holes 11 aligned along a horizontal axis B and housing a rotatable pivot pin 12 on whose centreline is integrally connected a cylinder 13 able to be rotatably coupled inside the cavity 9 of a subsequent link 7. In this way, the chain 6 is articulated along the axes A and B, mutually perpendicular and incident, allowing it to develop along complex paths comprising curves and rectilinear segments.

In the non limiting example described herein, the chain 6 follows a rectilinear path along the beam guide 3 and is actuated by the drive unit 5 which comprises a closed support case 14 rigidly connected to an end of the beam guide 3, an electric motor 15 connected to a drive pulley 16 meshing on pivot pins 12 and a pair of guide shoes 17 co-operating with a chain 6 at the inlet and at the outlet of the drive unit 5.

At the opposite end of the beam guide 3 relative to the drive unit 5 is located the inversion assembly 4 comprising a closed case 18 supporting an idle pulley 19 and a pair of shoes 20 similar to the shoes 17.

The chain 6 winds around the drive pulley 16 and to the idle pulley 19 defining a work branch 21 of the conveyor 1 along which it is possible to set down products to be conveyed according to a direct open path from the idle pulley 19 to the drive pulley 16, and a return branch 22, positioned below the work branch, along which the chain 6 moves in the opposite direction, i.e. from the drive unit 5 to the inversion assembly 4.

In particular, along the work branch 21 and the return branch 22 the chain 6 is supported by means of the beam guide 3 which comprises a load-bearing beam 23 made of extruded aluminium and having a bar 23a with hollow rectangular cross section and respectively upper 24 and lower 25 lateral walls in overhang projecting from opposite lateral ends of the bar 23a forming an H shaped cross section.

Along the lateral flanks of the beam guide 3 interposed between the upper and lower lateral walls 24 and 25, the load bearing beam 23 has on each side two continuous longitudinal grooves 26, set transversely side by side and able to allow the connection to the beam guide 3 of accessory structures (not shown), such as fall-preventing walls positioned longitudinally along the beam guide 3, or stop assemblies to allow the products to stop.

The beam guide 3 further comprises a horizontal support wall 27 made of steel, positioned in contact with the bar 23a and laterally connected to the upper lateral walls 24 by means of respective continuous grooves 28 and a covering wall 29 made of steel, dimensionally interchangeable with the support wall 27 and connected to respective ends of the lower lateral walls 25 opposite to the bar 23a through second continuous longitudinal grooves 30.

Moreover, the covering wall 27, the lower lateral walls 25 and the bar 23a define a tubular case 31 with rectangular cross section within which the chain 6 moves along the return branch 22.

In particular, the tubular case 31, the closed case 18 and the support case 14 define an environment 32 that is isolated from the exterior, in which the chain 6 and the moving parts are protected and no accidental contact, e.g. with an operator's hands, is possible.

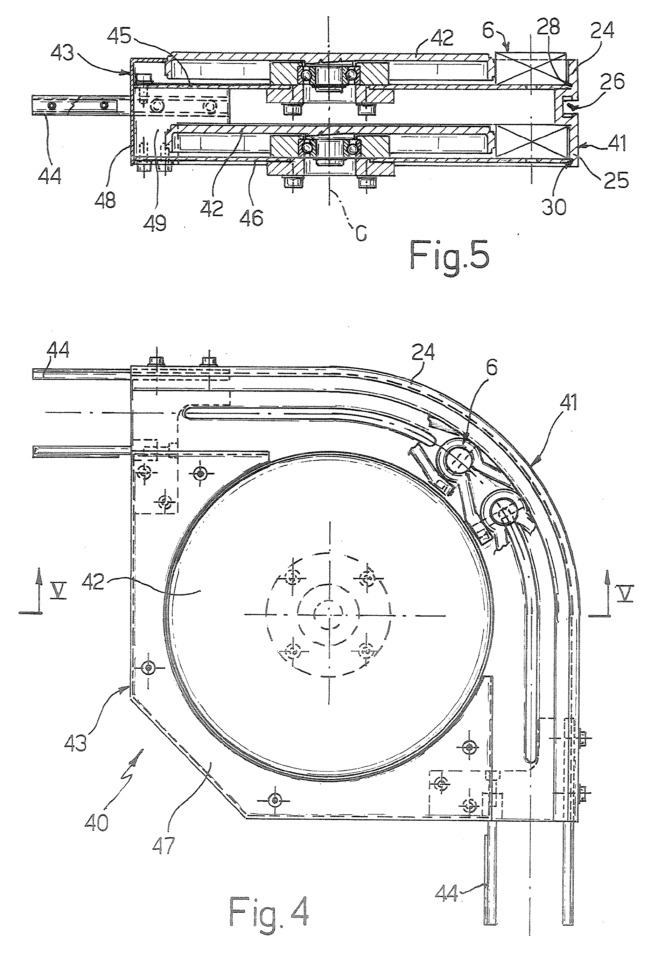

In a second embodiment, there may be (Figure 4) a curve 40 able to be connected to two beam guides 3 arranged respectively at 90° on a horizontal plane to achieve non rectilinear paths.

The curve 40 comprise a lateral curved beam 41 having a circumference arc profile with centre in a vertical axis C, a pair of idle drums 42 around the axis C forming with the curved beam 41 a lateral guide for the chain 6 respectively along the work branch 21 and the return branch 22, and box-like case 43 connected to the curved beam 41 and supporting the drums 42.

In particular, the curved beam 41 is obtained from a load-bearing beam 23 cut in the longitudinal direction and shaped by rolling processes and comprises elements which are designated below with identical numbers to the corresponding elements of the load bearing beam 23.

The curve 40 is connected to the beam guide by means of flanges 44 inserted longitudinally in one of the grooves 26 and engaging both the beam guide 3 and the curved beam 41. In this way, the grooves 26 are a reference for mounting and allow the transverse alignment of the respective upper 24 and lower 25 lateral walls of the beam guide 3 and of the curved beam 41.

Similarly, the grooves 28 and 30 are aligned horizontally and house plates respectively for supporting 45 and covering 46 the box case 43, made of steel, to support the drums 42 and functionally similar to the support walls 27 and covering wall 29.

The plates 45 and 46 are horizontally aligned and abut against the walls 27 and 29 preventing, by serving as an obstacle, any longitudinal sliding due, for example, to friction with the chain 6.

The box-like case 43 further supports a shaped plate 47 aligned horizontally to the upper end of the upper lateral wall 24 and having a circular shaped profile housing the drum 42 connected to the support plate 45.

The box-like case 43 through the lower lateral wall 25, the plates 45, 46 and a lateral wall 48 opposite to the lower lateral wall 25 relative to the axis C, delimits a volume 49 closed towards the exterior, communicating only with the space 32 to prevent the moving parts from being exposed to the exterior and in which the chain is laterally guided by the lower lateral wall 25 and by the drum 42 connected to the closure plate 46.

During the mounting phase, the support walls 27 and covering wall 29 are inserted longitudinally into the respective grooves 28 and 30 of the load-bearing beam 23 and are maintained in axial position both thanks to the friction with the edges of the grooves 28 and 30 themselves, and thanks to the abutment against the support 45 and covering 46 plates respectively aligned thereto in the horizontal direction.

In operation, a link 7 of the chain 6 is driven along the work branch 21 by the drive pulley 16 and slides on the support wall 27 of the beam guide 3 and on the support plate 45 when it travels over the curve 40, being laterally guided in the presence of minimal lateral play, by the upper lateral walls 24 and by the roller 42 connected to the support plate 45. The vertical height of the chain 6 is greater than that of the upper lateral walls 24 defining a work surface 60 of chain 6 and allowing to set products down on work surface 60 avoiding any interference with the upper lateral walls 24.

Once it arrives near the drive unit 5, the link 7 enters inside the support case 14 and into the space 32 and, after meshing on the drive pulley 16, it is guided by means of the shoe 17 to enter inside the tubular case 31.

Along the return branch 22, the link 7 traverses the space 32 sliding in contact with the covering wall 29 and with the covering plate 46 on work surface 60, thereby preventing the accumulation of external agents such as dusts or chips, which may have penetrated inside the space 32, because work surface 60, covering wall 29 and covering plate 46 are substantially flat (figure 3, 5).

In proximity to the inversion assembly 4, the mesh 7 enters the closed case 18 and, after meshing on the idle pulley 19, returns to the exterior environment on the work branch 21.

A review of the characteristics of the present invention makes readily apparent the advantages it allows to obtain.

In particular, the beam guide 3 and the curve 40 define a closed environment 32 crossed by the return branch 22 having particularly reduced bulk.

Moreover, the components used have simple geometry and employ readily available material, therefore being economical to produce.

The support walls 27 and covering wall 29 are easily connected to the load-bearing beam 23 through the grooves 28 and 30 and are interchangeable, further simplifying the mounting operations.

The support walls 27 and covering wall 29 are respectively aligned to the plates 45, 46 which constitute an abutment against the axial displacement of the walls 27 and 29.

Moreover, the sliding of the chain 6 on the walls 27 and 29 and on the plates 45 and 46 prevents the accumulation of any dust deposits, generating a self-cleaning effect during the operation of the conveyor 1.

Lastly, it is readily apparent that the conveyor described and illustrated herein can be subject to modifications and variants, without thereby departing from the scope of protection of the present invention, as defined in the appended claims.

In particular, the chain 6 can have inserts made of magnetic material to facilitate the conveyance of ferrous products. In this case, it is preferable to produce the support walls 27 and covering wall 29 from plastic material, e.g. nylon.

Moreover, the grooves 26 may be only two, one per side, if the conveyor 1 does not require the use of particular accessory structures.

## Claims

1. Conveyor (1) comprising a drive unit (5), a support assembly (3; 40) having a first guidance element (24) and a second guidance element (31; 43) having closed crossed section defined by a multiplicity of walls (23a, 25, 29; 25, 45, 46, 48), a first and a second inversion unit (16, 19) rigidly connected to said guidance assembly (3) and a closed chain (6) slidable on said guidance assembly (3) and co-operating with said first and second inversion units (16, 19) defining a first branch (21) along which said chain (6) slides guided by said first guidance element (24) and a second branch (22) along which said chain (6) slides guided by said second guidance element (31; 43), said conveyor (1) being **characterised in that** said chain (6) slides over at least one of said walls (29; 46) defining said second guidance element (31; 43).

2. Conveyor as claimed in claim 1, **characterised in that** said conveying branch (21) and return branch (22) are respectively superposed and **in that** said support assembly (3; 40) integrally comprises said first guidance element (24) and said second guidance element (31; 43).

3. Conveyor as claimed in claim 2, **characterised in that** said support element (3; 40) comprises a removable support wall (27; 45) whereon said chain (6) slides along said work branch (21).

4. Conveyor as claimed in any of the previous claims, **characterised in that** said at least one wall (29; 46) is removable.

5. Conveyor as claimed in claim 3 and 4, **characterised in that** said at least one wall (29; 46) and said support wall (27; 45) are interchangeable.

6. Conveyor as claimed in any of the preceding claims, **characterised in that** said guidance element (3) comprises a rectilinear load-bearing beam (23) having a substantially H shaped cross section defined by a central bar (23a), a pair of upper lateral walls (24) and a pair of lower lateral walls (25), said upper lateral walls (24) defining said first guidance element (24).

7. Conveyor as claimed in claim 6, **characterised in that** said at least one wall (29) is housed in longitudinal grooves (30) borne by said lower lateral walls (25), defining said second guidance element (31).

8. Conveyor as claimed in claims 6 or 7, **characterised in that** said at support wall (27) is in contact with said bar (23a) and is housed in second longitudinal grooves (28) borne by said upper lateral walls (24).

9. Conveyor as claimed in one of the claims from 6 through 8, **characterised in that** said support wall (27) and said at least one wall (29) are made of metallic or plastic material.

10. Conveyor as claimed in any one of the claims from 6 through 9, **characterised in that** said support assembly (40) is a curve (40), rigidly connected to said load-bearing beam (23), that said second guidance element (43) is a box-like element (43) having a curved lateral wall (41) having a circumference arc profile of axis (C), a lateral wall (48) opposite to said curved lateral wall (41) relative to said axis (C), a support plate (45) and a closing plate (46) orthogonal to said curved lateral wall (41) and lateral wall (48), a first drum (42) rotatable around said axis (C) and positioned internally to said box-like case (43) and a second drum (42) rotatable around said axis (C) and positioned externally to said case (42) and facing an upper wall (24) of said curved lateral wall (41).

11. Conveyor as claimed in claim 10, **characterised in that** said support plate (45) and closing plate (46) of said box-like case (43) are respectively aligned with and abut against said support wall (27) and said closing wall (29) borne by said load-bearing beam (23).

12. Conveyor as claimed in any of the previous claims, **characterized in that** said chain (6) defines a support surface (60) adapted for supporting products along said work branch (21) and **in that** said support surface (60) directly cooperates with said at least one wall (29; 46).

13. A beam element (23) for a chain conveyor (1) comprising a first and a second inversion unit (16, 19) suitable for being connected to said beam element (23), a closed chain (6) suitable for co-operating with said first and second inversion unit (16, 19) defining a first and a second branch (21, 22), said beam element (23) having a substantially H shaped cross section defined by a central bar (23a), a pair of upper lateral walls (24) able to guide said chain (6) along said first branch (21) and a pair of lower lateral walls (25), said beam element (23) being **characterised in that** it is suitable for co-operating with a wall (29) able to be connected to said lower lateral walls (25) and to define a guidance element (31) having a closed cross section, said chain (6) being able to slide over at least one of said lower lateral walls (25) and of said wall (29) along said second branch (22).

14. A curve (40) for a chain conveyor (1) comprising a beam support element (3), a first and a second inversion unit (16, 19) suitable for being connected to said beam support element (3), a closed chain (6) suitable for co-operating with said first and second inversion unit (16, 19) defining a first and a second branch (21, 22), said curve (40) comprising a box-like case (43) having a curved lateral wall (41) having a circumference arc profile with axis (C), a lateral wall (49) opposite to said curved wall (41) with respect to said axis (C), a support plate (34) and a closing plate (46) connected to said curved lateral wall (41) and lateral wall (48), a first drum (42) rotatable around said axis (C) and positioned internally to said box-like case (43) to be able to co-operate with said chain (6) along said first branch (21), said curve (40) being **characterised in that** said case (43) has a closed radial section, said chain (6) being suitable for sliding over said closing wall (46) along said second branch (22).
